Europäisches Patentamt
European Patent Office
Office européen des brevets

(11) Publication number: **0 042 688**
**B1**

## (12) EUROPEAN PATENT SPECIFICATION

(45) Date of publication of patent specification: **18.01.84**

(21) Application number: **81302522.8**

(22) Date of filing: **05.06.81**

(51) Int. Cl.³: **A 01 N 47/30** //A01N25/12, A01N25/04, (A01N47/30, 47/12)

(54) Weed control using 3-(4-isopropylphenyl)-1,1-dimethylurea in combination with S-2,3,3-trichloroallyl diisopropylthiocarbamate.

(30) Priority: **19.06.80 GB 8020026**

(43) Date of publication of application:
**30.12.81 Bulletin 81/52**

(45) Publication of the grant of the patent:
**18.01.84 Bulletin 84/3**

(84) Designated Contracting States:
**AT BE CH DE FR GB IT LI LU NL SE**

(56) References cited:
FR - A - 2 080 809
FR - A - 2 287 173

(73) Proprietor: MAY & BAKER LIMITED
Dagenham Essex, RM10 7 XS (GB)

(72) Inventor: Hewett, Richard Henry
The Briars Monk Street
Thaxted Essex (GB)
Inventor: Messenger, Peter Charles
8, The Spinney
Ongar Essex (GB)
Inventor: Woodford, Anthony Reginald
'Zouch', Rectory Close
Doddinghurst Essex (GB)

(74) Representative: Kelly, Hubert Francis
J.A. Kemp & Co. 14 South Square Gray's Inn
London WC1R 5EU (GB)

Courier Press, Leamington Spa, England.

**0 042 688**

Weed control using 3-(4-isopropylphenyl)-1,1-dimethylurea in combination with S-2,3,3-trichloroallyl diisopropylthiocarbamate

This invention relates to a new method for the control of weeds, i.e. undesired vegetation, and to new herbicidal formulations for use in the method and to processes for their preparation.

It is known that 3-(4-isopropylphenyl)-1,1-dimethylurea (hereinafter referred to as 'isoproturon') possesses valuable herbicidal properties and isoproturon is widely used in agriculture, particularly for the selective control of annual grasses, e.g. *Alopecurus myosuroides, Apera spica-venti, Avena fatua* and *Poa annua*, and a number of broad-leafed weeds, in particular the important species *Stellaria media, Matricaria inodora* and *Papaver rhoeas*, in crops of cereals, e.g. wheat, barley, and rye, by pre- or post-emergence application at application rates of 1.0 to 2.5 kg of isoproturon per hectare. (By the term 'pre-emergence application' is meant application to the soil in which the weed seeds or seedlings are present before emergence of the weeds above the surface of the soil. By the term 'post-emergence application' is meant application to the soil in which there are present aerial or exposed portions of weeds which have emerged above the surface of the soil). For use as a herbicide, isoproturon is commonly formulated as a flowable suspension of micronised particles, containing surfactants. These flowable suspension formulations are diluted with water at the time of application as a herbicide, to give spray fluids containing a suspension of micronised particles of isoproturon. When used at the application rates indicated above, isoproturon gives good control of blackgrass (*Alopecurus myosuroides*) and the broad-leafed weeds mentioned above. However, for the effective control of wild oat (*Avena fatua*), it is necessary to obtain at least 90%, and preferably 95%, control in order to reduce to acceptable levels the return of seeds from surviving plants to the soil and the use of isoproturon at the application rates indicated above is unreliable for controlling *Avena fatua* owing to the brief persistence of isoproturon in the soil and the extended germination period of the seeds of this weed. The use of higher rates of application of isoproturon improves the control of *Avena fatua* but often results in damage to the crop. In addition, the broad-leafed weed *Veronica persica* is resistant to isoproturon.

It is also known that S-2,3,3-trichloroallyl diisopropylthiocarbamate (hereinafter referred to as 'triallate') possesses valuable herbicidal properties and triallate is widely used in agriculture, particularly for the selective control of *Avena fatua* in crops of cereals, e.g. wheat, barley and rye, by pre-emergence or early post-emergence application at application rates of 1.0 to 3.0 kg of triallate per hectare. Triallate is volatile under normal atmospheric conditions and, when applied in the form of an emulsion before or after sowing of the crop, the emulsion must be incorporated into the soil because ofe this volatility. Triallate is also commonly formulated as granules, which are applied to the soil and which can be applied without incorporation into the soil, either by pre- or post-emergence application. It is believed that triallate is released from granular formulations predominantly or entirely in the form of a vapour. The volatility and good soil persistence of triallate ensures good control of *Avena fatua* under a wide range of climatic and edaphic conditions. Both emulsions and granular formulations of triallate can give useful control of *Alopecurus myosuroides* when applied before the sowing of the crop or pre-emergence, but the granular formulations give unreliable control of this weed when applied post-emergence. Attempts to improve the reliability and level of control of *Alopecurus myosuroides* achieved by the use of triallate by utilising application rates higher than those hereinbefore indicated can result in crop damage. Triallate has no useful activity on broad-leafed weeds except *Veronica persica*.

There is a widely-recognised need in agriculture for a method of controlling both *Avena fatua* and *Alopecurus myosuroides* together with a wide spectrum of broad-leafed weeds, including in particular *Stellaria media, Matricaria inodora* and *Veronica persica,* by the application of herbicides which is both reliable in respect of the level of weed control obtained and flexible in respect of the timing of the application of the herbicide(s). Three combinations of herbicides, each containing triallate and a herbicide of the phenylurea type have been proposed for this purpose.

(1) A granular formulation containing triallate [10% weight/weight (w/w)] and neburon [N - butyl - N$^1$ - (3,4 - dichlorophenyl) - N - methylurea; 17.5% (w/w)] is proposed in French Patent Specification No. 2287173, published on 7th May, 1976 and by Madelon, J., Brunet, Y. and Vagneur, B., Compte Rendu de la 9e Conference du COLUMA (1977), pages 880—891. This granular formulation was applied pre-emergence at a rate of 20 kg per hectare, which corresponds to the full normal recommended dose rates of triallate (2.0 kg per hectare) and neburon (3.5 kg per hectare). The control of both grass weeds and broad-leafed weeds thus obtained was reasonable (Madelon *et al*, ibid, page 886) but by no means complete and the authors (Madelon *et al,* ibid page 887) clearly consider that there was no observable additive interaction between the two herbicides, i.e. the weed control obtained was that which might be expected to be produced by the pre-emergence application of triallate and neburon alone at these rates of application.

(2) A granular formulation containing triallate (10% w/w) and methabenzthiazuron [N-(benzothiazol-2-yl)-N,N$^1$-dimethylurea; 14% w/w)] is described by Madelon *et al,* ibid., and by Michel, F., Pourcharesse, P. and Madelon J., Compte Rendu de la 9e Conference du COLUMA (1977), pages 892—901. This granular formulation was applied pre-emergence or early post-emergence (up to the 3-leaf stage in cereal crops) at a rate of 20 kg per hectare, corresponding to an application rate of 2.0 kg per hectare of triallate and an application rate of 2.80 kg per hectare of methabenzthiazuron. Pre-emergence application of this granular formulation gave better control of weeds than early post-emergence application, but satisfactory control of *Avena fatua*, where weed control of at least 90%, and preferably 95%, is necessary, was only achieved by the application of this granular formulation at a rate of 25 to 30 kg per hectare, corresponding to 2.5 to 3.0 kg per hectare of triallate and 3.5 to 4.2 kg per hectare of methabenzthiazuron. As with the granular formulation containing triallate and neburon described in (1) above, there was no observable additive interaction between the two herbicides triallate and methabenzthiazuron and application rates of both herbicides equal to or greater than those normally recommended for each herbicide when used alone, were required to give satisfactory control of a wide spectrum of grass and broad-leafed weeds.

(3) A granular formulation containing triallate (6%) and metoxuron .[N¹ - (3 - chloro - 4 - methoxyphenyl - N,N - dimethylurea; 14% w/w] is described by Madelon *et al*, ibid. This granular formulation was applied post-emergence at a rate of 20 kg per hectare, corresponding to 1.2 kg per hectare of triallate and 2.8 kg per hectare of metoxuron. Use of this granular formulation is stated to give a 40% reduction in the application rate or triallate and a 30% reduction in the application rate of metoxuron required to control *Avena fatua*, which Madelon *et al*, ibid page 888, describe as representing an additive herbicidal effect between triallate and metoxuron. However, the results quoted by Madelon *et al*, ibid, page 889, clearly show that, in order to obtain a satisfactory high level of control of *Avena fatua*, which is at least 90% and preferably 95%, application rates of 1.5 kg per hectare of triallate and 3.5 kg per hectare of metoxuron are required, which represents only a 25% reduction in the normally required application rate of triallate and a 12.5% reduction in the normally required rate of metoxuron. These findings are confirmed by Huguet, P., Malbrunot, P. and Ranat G., Compte Rendu de la 9ᵉ Conference du COLUMA (1977), pages 870—879. The interaction between triallate and metoxuron on *Avena fatua* is, at best, only slightly additive and the herbicidal effects of triallate and metoxuron appear, in fact, to be independent. Furthermore, this granular formulation of triallate and metoxuron is restricted in its flexibility in respect of the necessary timing of its application since it must be applied post-emergence.

Accordingly, these published studies on the use of combinations of triallate and herbicides of the phenylurea type teach that the herbicide components of such combinations, i.e. the triallate and the phenylurea herbicide, exert their herbicidal effect largely, if not entirely, independently and that virtually the full application rate which is normally recommended when each of triallate and the phenylurea herbicide is used separately, is required when such combinations of triallate and herbicides of the phenylurea type are used, in order to give the high level of weed control, i.e. at least 90%, and preferably 95%, which is required, in particular, for *Avena fatua* in order to reduce to acceptable levels the return of seeds from surviving plants to the soil and subsequent reinfestation. Independent activity and lack of additive interaction as herbicides would be expected from the known different modes of activity of triallate and herbicides of the phenylurea type. Furthermore these studies suggest that combinations of triallate and isoproturon would be expected to be unsatisfactory both in terms of the control of weeds and in flexibility of timing of application.

As a result of research and experimentation, it has surprisingly been found that the combined use of triallate and isoproturon as herbicides has a powerful additive interaction, particularly on *Avena fatua* and *Alopecurus myosuroides*, which provides a method for controlling the growth of both grass weeds and a wide spectrum of broad-leafed weeds reliably by both pre- and post-emergence application, thereby providing the required flexibility in respect of timing of application of the herbicides. The additive nature of the herbicidal activity exerted by triallate and isoproturon when used in combination is such as to allow a reduction of at least 40% and up to 50% of the application rates of both triallate and isoproturon required for satisfactory weed control, in comparison with the application rates normally required when triallate and isoproturon are used alone, thereby achieving a higher level of weed control and wider spectrum of weeds controlled at given application rates of triallate and isoproturon in combination, and improved crop selectivity. It has surprisingly been found that the use of isoproturon in combination with triallate in the ratios by weight of 2.5:1 to 1:2.5 respectively, and preferably in the ratio of 1:1 by weight, and at the application rates of 1.0 to 2.5 kg per hectare each of isoproturon and triallate, and more especially 1.25 to 1.75 kg per hectare each of isoproturon and triallate, provides a method for controlling a wide spectrum of grass and broad-leafed weeds at a locus of weed infestation, e.g. in arable crops, particularly wheat and barley, by pre- or post-emergence application and this method forms a feature of the present invention. The spectrum of weed control, flexibility of timing of application and persistence and reliability of weed control provided by this new method according to the present invention cannot be achieved by either isoproturon or triallate when either compound is used alone and effective weed control is achieved by the use of lower application rates of isoproturon and triallate than would be required by the use of either isoproturon or triallate alone, thereby reducing the risk of damage to the crop. More especially, the method according to the present invention gives a high degree of control of *Avena fatua* and *Alopecurus myosuroides*, with which weed control of at least 90%, and preferably 95%, is necessary to reduce to acceptable levels the return of seeds from surviving plants to the soil. To obtain this level of simultaneous control of both *Avena fatua* and *Alopecurus myosuroides* with either isoproturon or triallate alone would necessitate the use of high dose rates, thus

3

reducing crop selectivity and increasing the risk of damage to the crop.

According to a further feature of the present invention, there is provided a method for the control of the growth of grass weeds, e.g. *Avena fatua, Avena ludoviciana, Alopecurus myosuroides, Apera spica-venti, Poa annua, Poa trivialis* and *Bromus sterilis*, and broad-leafed weeds, e.g. *Aphanes arvensis, Anthemis arvensis, Anthemis cotula, Chenopodium album, Chrysanthemum segetum, Fumaria officionalis, Matricaria inodora, Papaver rhoeas, Polygonum aviculare, Polygonum persica, Polygonum lapathifolium, Stellaria media, Spergula arvensis* and *Veronica persica*, by pre- or post-emergence application of isoproturon and triallate in combination to a locus of weed infestation which is an area used, or to be used, for growing crops of cereal crops, in particular winter wheat, spring wheat, winter barley, spring barley and rye, and field beans, or by post-emergence application to a locus of weed infestation which is an area used for growing a crop of winter sown oilseed rape, in the ratios of isoproturon to triallate by weight of 2.5:1 to 1:2.5 respectively, and preferably in the ratio of 1:1 by weight, and at the application rates of 1.0 to 2.5 kg per hectare each of isoproturon and triallate, and more especially 1.25 to 1.75 kg per hectare each of isoproturon and triallate. (By the term 'locus of weed infestation' is meant an area of soil, e.g. a crop-growing area, in which weeds have emerged or are expected to emerge).

Application to autumn-sown crops of cereals, e.g. winter wheat and winter barley, and field beans gives particularly good results. Good control of weeds in spring-sown cereals may also be produced by application in the previous autumn, when the application is followed by prolonged periods of extreme cold, e.g. when the soil temperature remains at or below 0°C for three to five months, during the intervening winter.

In carrying out the method according to the present invention, isoproturon and triallate are applied simultaneously in the ratios by weight and at the application rates hereinbefore indicated, using conventional formulations, e.g. emulsions of triallate obtained by the dilution of emulsion concentrates with water and granular formulations of triallate, and suspensions of isoproturon obtained by the dilution of wettable powders and aqueous suspension concentrates of isoproturon with water, and granular formulations of isoproturon, or in granular formulations containing both isoproturon and triallate.

The available flowable suspension formulations of isoproturon and granular formulations of triallate are not normally such as to permit simultaneous application, for example by mixing the two formulations to give a tank-mix which may then be applied to a locus of weed infestation, thereby necessitating application of the two herbicides in separate operations, and the same is the case with granular formulations of isoproturon and emulsion concentrates of triallate. Hitherto, it has been considered that, in order to obtain good control of *Avena fatua*, it is necessary to incorporate emulsions of triallate into the soil at, or very shortly after, the time of application. It has now surprisingly been found that tank-mixes prepared from emulsion concentrates of triallate with wettable powder or aqueous suspension concentrates of isoproturon, give excellent control of *Avena fatua* when applied under winter conditions without incorporation into the soil. It is believed that this is due to the reduced volatility of triallate at low temperatures and/or adsorption of the triallate onto the particles of isoproturon. Similarly, the use of emulsion suspension concentrate formulations and emulsifiable suspension concentrate formulations containing both triallate and isoproturon gives good control of *Avena fatua* when applied under winter conditions without incorporation into the soil. However for greater flexibility, for simultaneous application of isoproturon and triallate, it is preferable to use granular formulations containing isoproturon and granular formulations containing triallate which may be mixed together as a tank-mix, or more especially to use granules containing both isoproturon and triallate. Granular formulations containing both isoproturon and triallate in the ratios of isoproturon to triallate by weight of 2.5:1 to 1:2.5 respectively, and more especially in the ratio of 1:1 by weight and the use of such granular formulations at application rates of 1.0 to 2.5 kg per hectare each of isoproturon and triallate, and more especially 1.25 to 1.75 kg per hectare each of isoproturon and triallate to control the growth of weeds at a locus of weed infestation as hereinbefore described, form preferred features of the present invention.

According to a further preferred feature of the present invention, isoproturon is used in combination with triallate in the ratios of isoproturon to triallate by weight of 2.5:1 to 1:2.5 respectively, and more especially in the ratio of 1:1 by weight and at application rates of 1.0 to 2.5 kg per hectare of each of isoproturon and triallate, and more especially 1.25 to 1.75 kg per hectare of each of isoproturon and triallate to control the growth of weeds, for example those weeds hereinbefore indicated, at a locus of weed infestation which is an area used, or to be used, for growing crops of wheat or barley:—

(a) by simultaneous pre- or post-emergence application under winter conditions without incorporation into the soil of liquid formulations of isoproturon and triallate, obtained by the dilution with water of tank-mixes of wettable powder or aqueous suspension concentrates of isoproturon and emulsion concentrates of triallate or emulsion suspension concentrates or emulsifiable suspension concentrates containing both isoproturon and triallate.

(b) by the simultaneous pre- or post-emergence application of granules containing isoproturon and granules containing triallate in the form of a tank-mix, or,

(c) preferably, the pre- or post-emergence application of granular formulations containing both isoproturon and triallate.

4

Compositions suitable for use in the method of the present invention comprise isoproturon or triallate in association with, and preferably homogeneously dispersed in, one or more compatible herbicidally-acceptable diluents or carriers (i.e. diluents or carriers of the type generally accepted in the art as being suitable for use in herbicidal compositions and which are compatible with isoproturon or triallate). The term "homogeneously dispersed" is used to include compositions in which isoproturon or triallate are dissolved in the other components. The term "herbicidal compositions" is used in a broad sense to include not only compositions which are ready for use as herbicides but also concentrates which must be diluted before use. Preferably, the compositions contain from 0.05 to 90% by weight of isoproturon or triallate.

The herbicidal compositions may contain both a diluent or carrier and a surface-active (e.g. wetting, dispersing, or emulsifying) agent. Surface-active agents which may be present in the herbicidal compositions may be of the ionic or non-ionic types, for example sulphoricinoleates, quaternary ammonium derivatives, products based on condensates of ethylene oxide with nonyl- or octyl-phenols, or carboxylic acid esters of anhydrosorbitols which have been rendered soluble by etherification of the free hydroxy groups by condensation with ethylene oxide, alkali and alkaline earth metal salts of sulphuric acid esters and sulphonic acids such as dinonyl- and dioctyl-sodium sulphonsuccinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, adsorbent carbon black and clays such as kaolin and bentonite. The solid compositions (which may take the form of dusts, granules or wettable powders) are preferably prepared by grinding isoproturon or triallate with solid diluents or by impregnating the solid diluents or carriers with solutions of isoproturon or triallate in solvents and, if necessary, grinding the products so as to obtain powders. Granular formulations may be prepared by absorbing isoproturon or triallate (dissolved in solvents) onto the solid diluents or carriers in granular form or by granulating compositions in powder form obtained as described above. Solid herbicidal compositions, particularly wettable powders, may contain wetting or dispersing agents (for example of the types described above), which may also, when solid, serve as diluents or carriers.

Liquid compositions may take the form of aqueous, organic or aqueous-organic solutions, suspensions and emulsions which may incorporate a surface-active agent. Suitable liquid diluents for incorporation in the liquid compositions include water, acetophenone, cyclohexanone, isophorone, toluene, xylene and mineral, animal and vegetable oils (and mixtures of these diluents). Surface-active agents, which may be present in the liquid compositions, may be ionic or non-ionic (for example of the types described above) and may, when liquid, also serve as diluents or carriers. Wettable powders and liquid compositions in the form of concentrates may be diluted with water or other suitable diluents, for example mineral or vegetable oils, particularly in the case of liquid concentrates in which the diluent or carrier is an oil, to give compositions ready for use. When desired, liquid compositions of isoproturon or triallate may be used in the form of self-emulsifying concentrates containing the active substances dissolved in the emulsifying agents or in solvents containing emulsifying agents compatible with the active substance, the simple addition of water to such concentrates producing compositions ready for use. Suitably, the herbicidal compositions may comprise from 0.05% to 15% of surface active agent. The herbicidal compositions may also contain, if desired, conventional adjuvants such as adhesives, protective colloids, thickeners, penetrating agents, stabilisers, anti-freezes, sequestering agents, anti-caking agents, colouring agents and corrosion inhibitors. These adjuvants may also serve as carriers or diluents.

Compositions suitable for use in the method of the present invention also include compositions as hereinbefore described in respect of compositions suitable for use in the method of the present invention which comprise isoproturon or triallate which comprise both isoproturon and triallate in association with one or more compatible herbicidally acceptable diluents or carriers, wherein the ratio of isoproturan to triallate in the composition is 2.5:1 to 1:2.5 respectively by weight, in the form of liquid emulsion suspension concentrates and liquid emulsifiable suspension concentrates comprising both isoproturan and triallate, which may be diluted with water to give compositions ready for use, and granular formulations which comprise both isoproturan and triallate.

Liquid emulsion suspension concentrates comprising triallate dissolved in organic solvents, e.g. hydrocarbon solvents, emulsified in aqueous suspensions of micronised isoproturon particles, liquid emulsifiable suspension concentrates comprising solutions of triallate in organic solvents, e.g. hydrocarbon solvents, in which are suspended micronised isoproturon particles, and, more especially, granular formulations containing both isoproturon and triallate, the ratios of isoproturon to triallate by weight in the aforesaid emulsion suspension concentrates, emulsifiable suspension concentrates and granular formulations being 2.5:1 to 1:2.5, and more especially 1:1, respectively, form preferred features of the present invention. Liquid emulsion suspension concentrates according to the present invention containing both isoproturon and triallate preferably comprise a combined total of from 10% to 70% weight/volume (w/v) of isoproturon and triallate, from 2% to 10% w/v of surface-active agent, from 0.1% to 5% w/v of thickener, from 15% to 87.9% by volume of organic solvent and from 0% to 60% by volume of water, and may be prepared by mixing these ingredients. Liquid emulsifiable

5

suspension concentrates according to the present invention containing both isoproturon and triallate preferably comprise a combined total for from 10% to 70% w/v of isoproturon and triallate, from 5% to 15% of surface-active agent, from 0.1% to 5% w/v of thickener and from 10% to 84.9% by volume of organic solvent and may be prepared by mixing these ingredients. Granular formulations according to the present invention containing both isoproturon and triallate preferably comprise a combined total of from 2% to 20% by weight of isoproturon and triallate, from 0.1% to 10% by weight of surface-active agent and from 70% to 97.9% by weight of granular carrier and may be prepared by granulating powders comprising these ingredients or, more conveniently, by asborbing solutions of isoproturon, triallate and surface-active agent in suitable solvents, e.g. dimethylformamide, onto the granular carrier and, if desired, removing the solvents, or, more especially, by incorporating micronised isoproturon particles, triallate and surface-active agent, as hereinafter described in respect of the preferred granular formulations according to the present invention.

According to a further feature of the present invention, there are provided preferred granular formulations containing both isoproturon and triallate which have been found by research and experimentation to have particularly advantageous properties, for example when used in the method of controlling the growth of weeds according to the present invention. The preferred granular formulations according to the present invention (hereinafter referred to as the 'preferred granules') not only permit the simultaneous application of isoproturon and triallate to a locus of weed infestation in a single operation, but also afford the additional advantage of allowing the preparation of granular formulations containing greater concentrations of isoproturon than is conveniently possible by absorbing solutions of isoproturon onto a granular carrier, the maximum amount of isoproturon which can be incorporated onto a granular carrier by means of a solvent solution being, in practice, about 3% w/w. These preferred granules allow the release of isoproturon without any delay being produced in the release of triallate, and gives enhanced control of the important weed species *Avena fatua* and *Alopecurus myosuroides*.

The preferred granules contain isoproturon and triallate in the ratios by weight of 2.5:1 to 1:2.5 respectively, and more especially in the ratio of 1:1 by weight, and a combined total of from 2% to 20% by weight of isoproturon, in the form of micronised particles, and triallate and, in order to achieve particularly satisfactory release of the two herbicides, have a diameter of from 150 to 1000 $\mu$m. The preferred granules according to the present invention may be of the compounded type, i.e. granules in which the micronised particles of isoproturon and the triallate are incorporated into the body of the granule, or, as is preferred, of the core type i.e. granules consisting of a granule core into which the triallate is incorporated and to the surface of which the micronised particles of isoproturon adhere, and having an overall diameter of 150 to 1000 $\mu$m.

The preferred compounded granules and the granular cores of the preferred core granules according to the present invention may be formed from inert carriers of the types customarily used in the preparation of granular formulations used in agriculture and which are absorbent and permeable to triallate and triallate-containing solutions. Suitable inert carriers include clays. The preferred inert carrier according to the present invention is sepiolite, which is a clay consisting predominantly of magnesium and aluminium silicates. Mineral clays with similar absorptive properties to sepiolite, for example montmorillonite, attapulgite and diatomite, are also suitable.

When incorporated into the preferred compounded granules according to the present invention, the micronised isoproturon particles are from 1 $\mu$m to 40 $\mu$ in diameter, the use of particles of diameter greater than 40 $\mu$m being undesirable, since an unsatisfactory rate of release of isoproturon may result.

When incorporated into the preferred core granules according to the present invention, in which the particles of isoproturon adhere to the surface of the granule core, satisfactory release of isoproturon from the granules and satisfactory resistance to removal of isoproturon by mechanical abrasion during manufacture, storage and transportation, is achieved by the use of micronised isoproturon particles predominantly less than 10$\mu$m in diameter and preferably less than 5 $\mu$m in diameter. More especially, the micronised isoproturon incorporated into the preferred core granules according to the present invention should not contain in excess of 1% of particles of 10$\mu$m or greater diameter, in excess of 20% of particles of 5 $\mu$m or greater in diameter and in excess of 65% of particles of 2.5 $\mu$m or greater in diameter, and preferably at least 90% of the particles should have a particle size of 1 $\mu$m diameter or greater.

The preferred granules according to the present invention may contain, in addition to an inert carrier, surface-active (e.g. wetting, dispersing or emulsifying) agents. Surface-active agents which may be present in granular formulations according to the present invention may be of the ionic or non-ionic types, for example sulphoricinoleates, quaternary ammonium derivatives, carboxylic acid esters of anhydrosorbitols which have been rendered soluble by etherification of the free hydroxy groups with ethylene oxide, alkali and alkaline earth metal salts of sulphuric and sulphonic acids such as dinonyl- and dioctyl-sodium sulphosuccinates, alkali and alkaline earth metal salts of high molecular weight sulphonic acid derivatives such as sodium and calcium lignosulphonates or, preferably, products based on condensates of ethylene oxide with nonyl- or octyl-phenols. Incorporation of surface-active agents into the granular formulations according to the present invention facilitates both the preparation of the granules and the release of isoproturon from the granules when in use for herbicidal purposes.

# 0 042 688

Preferably, the preferred granules according to the present invention contain from 0.1% to 10% by weight of surface-active agent.

The preferred granules according to the present invention, and more especially the preferred core granules, may, if desired, contain from 0.01% to 5% weight/weight (w/w) of adhesives or 'stickers', for example cellulosic or xanthene gums, paraffin waxes, resins, polyisobutenes, polyvinyl alcohol or vinyl acetate, which assist, in particular, adherence of the isoproturon particles to the inert carrier.

The preferred granules according to the present invention in the form of compounded granules may be prepared by intimately mixing the micronised isoproturon and triallate and, if desired, surface-active agent, with the inert carrier, e.g. a clay, for example sepiolite, in powder form, if necessary in the presence of a suitable liquid, and then granulating the powder blend thus obtained and, if necessary, drying the granules thus obtained, or by intimately mixing the micronised isoproturon and, if desired, surface-active agent, with the inert carrier, e.g. a clay, for example sepiolite, in powder form, if necessary in the presence of a suitable liquid, granulating the powder blend thus obtained and, if necessary, drying the granules thus obtained, and then treating the isoproturon — containing granules with a solution of triallate in a suitable liquid to absorb the triallate into the granules and, if necessary, drying the granules thus obtained.

Preferred granules according to the present invention in the form of core granules, which form a particularly preferred feature of the present invention, may be prepared by suspending the micronised isoproturon in a solution of triallate and, if desired, surface-active agent, in a suitable liquid and applying uniformly the suspension thus obtained to granule cores of the inert carrier, e.g. a clay, for example sepiolite, in a blender, whereby the triallate and, if present, surface-active agent, are absorbed into the granule core and the micronised isoproturon particles adhere to the surface of the granule core and, if necessary, drying the granules thus obtained. If desired, adhesives may be incorporated during the preparation of the preferred granules.

Suitable liquid which may be used in the preparation of the preferred granules according to the present invention are liquids in which triallate has a solubility of at least 30% w/v (weight/volume) and preferably 40% w/v or greater, but in which isoproturon has a solubility not greater than, and preferably less than, 5% w/v, and include aliphatic and aromatic hydrocarbons, ketones, alcohols, ethers, dimethylsulphoxide and chlorinated hydrocarbons. Suitable liquids may be volatile or non-volatile and the use of volatile liquids facilitates removal of excess liquid after preparation of the preferred granules. However, the preferred granules may be allowed to contain from 1% to 25% w/w of suitable liquids, the presence of which serves to facilitate, if desired, the release of isoproturon and, more especially, triallate from the preferred granules at the time of use to control the growth of weeds, more especially when surface-active agents are incorporated in the preferred granules. For this purpose, the use of suitable liquids of relatively low volatility is preferred. It is to be understood that the term 'drying', when used in the context of the preparation of the preferred granules, refers essentially to the removal of any surplus of suitable liquids from the surface of the preferred granules as a final stage in their preparation and does not necessarily indicate the substantially-total removal of the suitable liquid used in the preparation of the preferred granules.

Powder blends and inert carriers in powder form may be granulated by conventional techniques, e.g. extrusion and granulation, compaction and granulation, pan granulation, ribbon blender granulation, fluid bed granulation and granulation by prilling.

The following Examples illustrate the preparation of formulations suitable for use in the method of controlling the growth of weeds according to the present invention.

### Example 1
Granules containing both isoproturon and triallate containing:—

| | |
|---|---|
| Isoproturon | 3% w/w |
| Triallate | 3% w/w |
| Ethylan BCP (a nonylphenol/ethylene oxide condensate containing 9 to 10 moles of ethylene oxide per mole of nonylphenol) | 0.36% w/w |
| Dimethylformamide | 23.64% w/w |
| Sepitol 30/60 granule cores (sepiolite granules of which 90% have a diameter of from 250 to 500 $\mu$m) | to 100% by weight |

were prepared by dissolving the isoproturon, triallate and Ethylan BCP in the dimethylformamide at 20°C with stirring and then spraying the resultant solution onto the granule cores in a drum blender. The granules were then sieved to remove agglomerates, to give granules utilised in Experiment 1

7

described herein and which may be applied at a rate of 50 kg of granules per hectare a locus of weed infestation which is an area used to grow a crop of wheat, after sowing the crop, to control by pre-emergence application the growth of annual grass weeds and broad-leafed weeds as hereinbefore described.

The following Examples 2 to 7 illustrate the preparation of preferred granules according to the present invention.

### Example 2

Core granules containing 6% by weight each of isoproturon and triallate were prepared by:—

Step A Mixing together:—
(1) Triallate (technical grade containing 90% by weight of triallate) (2.38 kg)
(2) Ethylan BCP (0.26 kg)
(3) High Flash Naphtha CW (a high boiling point petroleum fraction) (5.82 kg)

Step B
Slowly adding micronised isoproturon (technical grade containing 95% by weight of isoproturon; particle size 99% less than 10 $\mu$m in diameter. 80% less than 5 $\mu$m in diameter, 35% less than 2.5 $\mu$m in diameter, obtained by air-jet milling) (2.26 kg) with stirring to the solution obtained in Step A and continuing mixing until a smooth slurry was obtained.

Step C
Sieving the slurry obtained in Step B through a 250 $\mu$m sieve and spraying at a pressure of 2.24 kg/cm$^2$ through a Teejet 8002 fan-jet delivering approximately 600 ml of slurry per minute at an angle of spray pattern of 60° to 80° on to Sepitol 30/60 granule cores (sepiolite granules of which 90% have a diameter of from 250 to 500 $\mu$m) (25 kg) in a Nauta (cone blender) mixer with continuous mixing. On completion of spraying and a further brief period of mixing, the granules were sieved through a 1.4 $\mu$m sieve to remove agglomerates.

There was thus obtained 35.72 kg of core granules containing 6% w/w of both isoproturon and triallate utilised in Experiment 2 described herein and which may be applied at a rate of 25 kg of granules per hectare to a locus of weed infestation which is an area used to grow a crop of wheat, after sowing of the crop, to control by pre-emergence application the growth of annual grass weeds and broad-leafed weeds as hereinbefore described.

### Example 3

By proceeding as described in Example 2 but using 2.78 kg of triallate (technical grade containing 90% by weight of triallate), 0.3 kg of Ethylan BCP, 9.29 kg of High Flash Naphtha CW, 2.63 kg of isoproturon (technical grade containing 95% by weight of isoproturon containing the percentage of particles sizes specified in respect of the isoproturon used in Example 2) and 35 kg of Sepitol 30/60 core granules there was obtained 50 kg of core granules containing 5% w/w of both isoproturon and triallate utilised in Experiment 2 described herein and which may be applied at a rate of 25 kg of granules per hectare to a locus of weed infestation which is an area used to grow a crop of wheat, after sowing of the crop, to control by pre-emergence application the growth of annual grass weeds and broad-leafed weeds as hereinbefore described.

### Example 4

By proceeding as described in Example 2 using the appropriate amounts of triallate and isoproturon, there were obtained core granules containing 4% w/w of isoproturon and 10% w/w of triallate, which may be applied at a rate of 25 kg of granules per hectare to a locus of weed infestation which is an area used to grow a crop of winter wheat, after sowing of the crop, to control by pre-emergence application the growth of *Avena fatua, Alopecurus myosuroides, Veronica persica* and *Matricaria inodora.*

### Example 5

By proceeding as described in Example 2 using the appropriate amounts of triallate and isoproturon, there were obtained core granules containing 10% w/w of isoproturon and 4% w/w of triallate, which may be applied at a rate of 25 kg of granules per hectare to a locus of weed infestation which is an area used to grow a crop of winter wheat, after sowing of the crop, to control by pre-emergence application the growth of *Avena fatua, Alopecurus myosuroides, Veronica persica, Matricaria inodora* and *Stellaria media.*

### Example 6

By proceeding as described in Example 2 using the appropriate amounts of triallate and isoproturon, there were obtained core granules containing 1% w/w of isoproturon and 1% w/w of triallate, which may be applied at a rate of 150 kg of granules per hectare to a locus of weed infestation which is an area used to grow a crop of winter wheat, after sowing of the crop, to control by pre-emergence application the growth of *Avena fatua, Alopecurus myosuroides, Veronica persica, Matricaria inodora* and *Stellaria media.*

Example 7

By proceeding as described in Example 2 using the appropriate amounts of triallate and isoproturon, there were prepared core granules containing 10% w/w of isoproturon and 10% w/w of triallate, which may be applied at a rate of 15 kg of granules per hectare to a locus of weed infestation which is an area used to grow a crop of winter barley, after sowing of the crop, to control the growth by pre-emergence application of *Avena fatua, Alpecurus myosuroides, Veronica persica, Matricaria inodora* and *Stellaria media.*

Example 8

A liquid emulsion suspension concentrate containing:—

| | |
|---|---|
| Isoproturon (micronised) | 25% w/v |
| Triallate | 25% w/v |
| Ethylan BCP | 10% w/v |
| High Flash Naphtha CW | 25% volume/volume (v/v) |
| Ethylene Glycol | 5% v/v |
| Rhodigel 23 (polysaccharide xanthan gum thickener) | 0.2% w/v |
| Water | to 100% by volume |

was obtained by preparing a solution of the triallate and 80% of the Ethylan BCP in the High Flash Naphtha CW and a suspension of the micronised isoproturon, 20% of the Ethylan BCP, the ethylene glycol, the Rhodigel 23 and water, mixing the solution and suspension with adequate stirring and adding water to 100% by volume with stirring, to give a smooth cream, which may be diluted with water and applied without incorporation into the soil at an application rate of 5 to 7 litres of emulsion suspension concentrate in 400 litres of spray fluid per hectare to control the growth of *Avena fatua, Alopecurus myosuroides*, and broad-leafed weeds, e.g. those species hereinbefore described, by post-emergence application in an emerged crop of winter wheat.

Example 9

A liquid emulsifiable suspension concentrate containing:—

| | |
|---|---|
| Isoproturon (micronised) | 30% w/v |
| Triallate | 30% w/v |
| Ethylan BCP | 4% w/v |
| Arylan CA (calcium dodecyl benzene sulphonate) | 3% w/v |
| Ethylhydroxyethylcellulose (thickener) | 1% w/v |
| High Flash Naphtha CW | to 100% by volume |

was obtained by preparing a solution of the triallate, Ethylan BCP and Arylan CA in High Flash Naphtha CW, dissolving the cellulose thickener with maceration in this solution, suspending the micronised isoproturon in the solution thus obtained by stirring and adding High Flash Naphtha CW to 100% by volume with stirring. The emulsifiable suspension concentrate thus obtained may be diluted with water and applied without incorporation into the soil at a rate of 5 litres of emulsifiable suspension concentrate in 300 litres of spray fluid per hectare to a locus of weed infestation which is an area used to grow a crop of winter barley, after sowing of the crop, to control by pre-emergence application the growth of annual grass weeds and broad-leafed weeds, e.g. those species hereinbefore described.

Example 10

By proceeding as described in Example 8 using the appropriate amounts of micronised

9

isoproturon and triallate, a liquid emulsion suspension concentrate was prepared containing 10% w/v of isoproturon and 25% w/v of triallate, which may be diluted with water and applied without incorporation into the soil at an application rate of 10 litres of emulsion suspension concentrate in 400 litres of spray fluid per hectare to control the growth of *Avena fatua, Alopecurus myosuroides* and broad-leafed weeds, e.g. those species hereinbefore described, by post-emergence application in an emerged crop of winter wheat.

## Example 11

By proceeding as described in Example 8 using the appropriate amounts of micronised isoproturon and triallate, a liquid emulsion concentrate was prepared containing 25% w/v of isoproturon and 10% w/v of triallate which may be diluted with water and applied without incorporation into the soil at a rate of 10 litres of emulsion suspension concentrate in 400 litres of spray fluid per hectare to a locus of weed infestation which is an area used to grow a crop of winter wheat, after sowing of the crop, to control by pre-emergence application the growth of *Avena fatua, Alopecurus myosuroides, Veronica persica, Matricaria inodora* and *Stellaria media.*

## Example 12

By proceeding as described in Example 9 using the appropriate amounts of micronised isoproturon and triallate, a liquid emulsifiable suspension concentrate was prepared containing 10% w/v of isoproturon and 25% w/v of triallate, which may be diluted with water and applied without incorporation in the soil at a rate of 10 litres of emulsifiable suspension concentrate in 400 litres of spray fluid per hectare to a locus of weed infestation which is an area used to grow a crop of winter wheat, after sowing of the crop, to control by pre-emergence application the growth of *Avena fatua, Alopecurus myosuroides, Veronica persica* and *Matricaria inodora.*

## Example 13

By proceeding as described in Example 9 using the appropriate amounts of micronised isoproturon and triallate, a liquid emulsifiable suspension concentrate was prepared containing 10% w/v of isoproturon and 25% w/v of triallate, which may be diluted with water and applied without incorporation into the soil at a rate of 10 litres of emulsifiable suspension concentrate in 400 litres of spray fluid per hectare to control the growth of *Avena fatua, Alopecurus myosuroides* and broad-leafed weeds, e.g. those species hereinbefore described, by post-emergence application in an emerged crop of winter wheat.

The method of controlling the growth of weeds according to the present invention is demonstrated in the following experiments.

## Experiment 1

Isoproturon and triallate were applied simultaneously, in the form of granules containing both isoproturon and triallate, in comparison with applications of isoproturon or triallate, pre- or post-emergence to field grown crops of winter wheat and barley in the south-east of England and the East Anglia district of England. The applications were made at times after the sowing of the crop from pre-emergence to the 3-leaf stage of grass weeds and the 4- to 6-leaf stage of broad-leafed weeds. (Applications to *Papaver rhoeas* were made at the pre-emergence stage only).

The formulations used in this experiment were:—

(1) granules containing both 3% w/w (weight/weight) of isoproturon and 3% w/w of triallate, prepared as described in Example 1. These granules were applied at a rate of 50 kg of granules per hectare, corresponding to 1.5 kg per hectare each of isoproturon and triallate,

(2) a commercially available 50% weight/volume aqueous suspension concentrate of isoproturon, which was applied, after dilution with water, at a rate of 5 litres of concentrate in 293.3 litres of spray fluid per hectare, corresponding to 2.5 kg per hectare of isoproturon.

(3) commercially available granules containing 10% w/w of triallate. These granules were applied at a rate of 27.5 kg of granules per hectare, corresponding to 2.75 kg per hectare of triallate.

Granular formulations were applied uniformly by means of a motorised granular applicator. Sprays of aqueous suspensions of isoproturon were applied by means of a small-plot motorised sprayer using 6 jets (8002 teejets) at a pressure of 2.1 bars and delivering a volume rate equivalent to 293.3 litres of spray fluid per hectare.

For each treatment, three replicated plots, each 12 metres long and 3.5 metres wide, were used and untreated plots were kept as controls.

Three or four months after treatment, the numbers of weeds occurring in 1/2 square metre quadrats (2 or 3 per plot) were recorded and the percentage weed control of individual weed species and of all the weeds (total weeds) obtained in treated plots was determined in comparison with untreated control plots, by the following formula:

$$\text{Percentage weed control} = \frac{X-Y}{X} \times 100$$

where X is the number of weeds in untreated plots and Y is the number of weeds in treated plots. The results obtained are set out in the following Table 1.

TABLE 1

| Treatment | Application rate (kg/hectare) isoproturon and/or triallate | Percentage weed control | | | | | | | |
|---|---|---|---|---|---|---|---|---|---|
| | | Avena fatua | Alopecurus myosuroides | Poa annua | Stellaria media | Papaver rhoeas | Matricaria inodora | Veronica persica | Total Weeds |
| Granules containing both (i) isoproturon and (ii) triallate | 1.5 (i) + 1.5 (ii) | 97 | 100 | 100 | 99 | 100 | 100 | 99 | 98 |
| Isoproturon aqueous suspension | 2.5 | 85 | 96 | 100 | 99 | 100 | 100 | 65 | 90 |
| Triallate granules | 2.75 | 85 | 85 | 94 | 27 | 74 | 37 | 93 | 70 |
| Number of sites | | 7 | 9 | 3 | 8 | 1 | 3 | 5 | — |

These results show that the use of low application rates of isoproturon and triallate in combination gives much better control of a wide spectrum of weeds than the use of higher application rates of isoproturon and triallate alone.

The method of controlling the growth of weeds by application of preferred granules according to the present invention is demonstrated in the following experiment.

## Experiment 2

Isoproturon and triallate were applied simultaneously, in the form of granules containing both isoproturon and triallate, in comparison with applications of isoproturon or triallate, pre or post-emergence to field grown crops of winter wheat and barley in the south-east of England and the East-Anglia district of England. The applications were made at times after the sowing of the crop from pre-emergence to the 3-leaf stage of grass weeds and the 4 to 6-leaf stage of broad-leafed weeds. (Applications to *papaver rhoeas* were made at the pre-emergence stage only).

The formulations used in this experiment were:-

(1) granules containing (a) both 6% w/w /weight/weight) of isoproturon and 6% w/w of triallate, prepared as described in Example 2 and (b) both 5% w/w of isoproturon and 5% w/w of triallate, prepared as described in Example 3. These granules were applied at a rate of 25 kg of granules per hectare, corresponding to 1.5 kg per hectare each of isoproturon and triallate and 1.25 kg per hectare each of isoproturon and triallate, respectively,

(2) a commercially available 50% weight/volume aqueous suspension concentrate of isoproturon, which was applied, after dilution with water, at a rate of 5 litres of concentrate in 293.3 litres of spray fluid per hectare, corresponding to 2.5 kg per hectare of isoproturon,

(3) commercially available granules containing 10% w/w of triallate. These granules were applied at a rate of 27.5 kg of granules per hectare, corresponding to 2.75 kg per hectare of triallate.

Granular formulations were applied uniformly by means of a motorised granular applicator. Sprays of aqueous suspensions of isoproturon were applied by means of a small-plot motorised sprayer using 6 jets (8002 teejets) at a pressure of 2.1 bars and delivering a volume rate equivalent to 293.3 litres of spray fluid per hectare.

For each treatment, three replicated plots, each 12 metres long and 3.5 metres wide, were used and untreated plots were kept as controls.

Three or four months after treatment, the number of weeds occurring in 1/2 square metre quadrats (2 or 3 per plot) were recorded and the percentage weed control of individual weed species and of all the weeds (total weeds) obtained in treated plots was determined in comparison with untreated control plots, by the following formula:-

$$\text{Percentage weed control} = \frac{X - Y}{X} \times 100$$

where X is the number of weeds in untreated plots and Y is the number of weeds in treated plots. The results obtained are set out in the following Table 2.

13

TABLE 2

| Treatment | Application rate (kg/hectare) isoproturon and/or triallate | Percentage weed control | | | | | | | |
|---|---|---|---|---|---|---|---|---|---|
| | | *Avena fatua* | *Alopecurus myosuroides* | *Poa annua* | *Stellaria media* | *Papaver rhoeas* | *Matricaria inodora* | *Veronica persica* | Total Weeds |
| Granules containing both (i) isoproturon | 1.5 (i) + 1.5 (ii) | 99.5 | 99.5 | 100 | 98 | 100 | 100 | 100 | 99 |
| and (ii) triallate | 1.25 (i) + 1.25 (ii) | 99 | 99 | 100 | 96 | 100 | 100 | 98 | 96 |
| Isoproturon aqueous suspension | 2.5 | 85 | 96 | 100 | 99 | 100 | 100 | 65 | 90 |
| Triallate granules | 2.75 | 85 | 85 | 94 | 27 | 74 | 37 | 93 | 70 |
| Number of sites | | 7 | 9 | 3 | 8 | 1 | 3 | 5 | — |

These results show that the use of low application rates of isoproturon and triallate in the preferred granules gives much better control of a wide spectrum of weeds than the use of higher application rates of isoproturon and triallate alone.

# 0 042 688

### Experiment 3

Isoproturon and triallate were applied simultaneously, in the form of a tank-mix of triallatte emulsion and isoproturon suspension in comparison with applications of isoproturon or triallate alone, pre- or post-emergence to field grown crops of winter wheat and barley in the East Anglia district of England. The applications were made at times after the sowing of the crop from pre-emergence to post-emergence of grass weeds and broad-leafed weeds.

The formulations used in this experiment were:-

(1) a tank-mix prepared by mixing and diluting with water a commercially available 40% weight/volume emulsifiable concentrate of triallate and a commercially available 50% weight/volume aqueous suspension concentrate of isoproturon. This tank-mix was applied, after dilution with water, at a rate of 3.75 litres of triallate emulsifiable concentrate and 3.0 litres of isoproturon aqueous suspension concentrate in 340 litres of spray fluid per hectare, corresponding to 1.5 kg per hectare each of isoproturon and triallate.

(2) the commercially available 50% weight/volume aqueous suspension concentrate of isoproturon mentioned in (1) immediately above, which was applied, after dilution with water, at a rate of 5 litres of concentrate in 340 litres of spray fluid per hectare, corresponding to 2.5 kg per hectare of isoproturon,

(3) commercially available granules containing 10% w/w of triallate. These granules were applied at a rate of 22.5 kg of granules per hectare, corresponding to 2.25 kg per hectare of triallate.

Granular formulations of triallate were applied uniformly by means of a motorised granular applicator. Sprays of aqueous suspensions of isoproturon alone and the liquid tank-mix of triallate emulsion and isoproturon suspension were applied by means of a small-plot motorised sprayer using 6 jets (8003 teejets) at a pressure of 2.1 bars and delivering a volume rate equivalent to 340 litres of spray fluid per hectare.

For each treatment, three replicated plots, each 10 metres long and 3 metres wide, were used and untreated plots were kept as controls.

Three or four months after treatment, the numbers of weeds occurring in 1/2 square metre quadrats (2 per plot) were recorded and the percentage weed control of individual weed species obtained in treated plots was determined in comparison with untreated control plots, by the following formula:-

$$\text{Percentage weed control} = \frac{X - Y}{X} \times 100$$

where X is the number of weeds in untreated plots and Y is the number of weeds in treated plots. The results obtained are set out in the following Table 3.

TABLE 3

| Treatment | Application rate (kg/hectare) isoproturon and/or triallate | Percentage weed control | | | | | | |
|---|---|---|---|---|---|---|---|---|
| | | Avena fatua | Alopecurus myosuroides | Poa annua | Stellaria media | Papaver rhoeas | Matricaria inodora | Veronica persica |
| Liquid tank-mix containing both (i) isoproturon and (ii) triallate | 1.5 (i) + 1.5 (ii) | 90 | 97 | 98 | 96 | 100 | 99 | 93 |
| Isoproturon aqueous suspension | 2.5 | 75 | 95 | 93 | 96 | 100 | 100 | 55 |
| Triallate granules | 2.25 | 76 | 66 | 67 | 31 | 15 | 41 | 93 |
| Number of sites | | 8 | 8 | 4 | 7 | 1 | 8 | 6 |

These results show that the use of a low application rate of a liquid tank-mix containing both isoproturon and triallate gives much better control of a wide spectrum of weeds than the use of higher application rates of isoproturon and triallate alone.

**0 042 688**

Claims

1. A method for the control of the growth of grass weeds and broad-leafed weeds characterised in that the herbicide 3(4-isopropylphenyl)-1,1-dimethylurea (hereinafter referred to as 'isoproturon') and the herbicide S-2,3,3-trichloroallyl diisopropylthiocarbamate (hereinafter referred to as 'triallate') are applied in combination to a locus of weed infestation in the ratios of isoproturon to triallate by weight of 2.5:1 to 1:2.5, and preferably 1:1, respectively and at the application rates of 1.0 to 2.5, preferably 1.25 to 1.75, kg per hectare each of isoproturon and triallate by pre- or post-emergence application.

2. A method for the control of the growth of grass weeds and broad-leafed weeds according to claim 1 characterised in that isoproturon and triallate are applied in combination (i) by pre- or post-emergence application to a locus of weed infestation which is an area used, or to be used, for the growing of cereal crops and field beans or (ii) by post-emergence application to a locus of weed infestation which is an area used for growing a crop of winter sown oilseed rape.

3. A method according to claim 1 or 2 characterised in that the weeds controlled are one or more of *Avena fatua, Avena ludoviciana, Alopecurus myosuroides, Apera spica-venti, Poa annua, Poa trivialis, Bromus sterilis, Alphanes arvensis, Anthemis arvensis, Anthemis cotula, Chenopodium album, Chrysanthemum segetum, Fumaria officionalis, Matricaria inodora, Papaver rhoeas, Polygonum aviculare, Polygonum persica, Polygonum lapathifolium, Stellaria media, Spergula arvensis* and *Veronica persica.*

4. A method according to claim 1, 2 or 3 characterised in that the isoproturon and triallate are applied simultaneously to a locus of weed infestation which is an area used, or to be used, for growing a crop of winter wheat, spring wheat, winter barley, spring barley or rye.

5. A method according to any one of claims 1 to 4 characterised in that the isoproturon and triallate are applied simultaneously by means of a tank-mix prepared from emulsion concentrates of triallate with wettable powder or aqueous suspension concentrates of isoproturon, by means of liquid emulsion suspension concentrates or emulsifiable suspension concentrates containing both isoproturon and triallate, or in granular formulations containing both isoproturon and triallate.

6. A herbicidal composition for the control of the growth of grass weeds and broad-leafed weeds characterised in that the composition contains a combination of isoproturon and triallate in association with one or more compatible herbicidally acceptable diluents or carriers, wherein the ratio of isoproturon to triallate in the composition is 2.5:1 to 1:2.5, and preferably 1:1, respectively by weight, in the form of a liquid emulsion suspension concentrate, a liquid emulsifiable suspension concentrate, or a granular formulation.

7. A herbicidal composition according to claim 6 characterised in that the herbicidal composition is in the form of a granular formulation which contains from 2% to 20% by weight of isoproturon, in the form of micronised particles, and triallate, and the granules have a diameter of from 150 to 1000 $\mu$m.

8. A herbicidal composition according to claim 7 characterised in that the isoproturon, in the form of micronised particles, and triallate are incorporated into the body of the granule, or the triallate is incorporated into the granule core and the micronised particles of isoproturon adhere to the surface of the granule.

9. A herbicidal composition according to claim 6, 7 or 8 characterised in that the herbicidal composition is in the form of a granular formulation of the compounded type, as hereinbefore defined, wherein the micronised isoproturon particles are from 1 $\mu$m to 40 $\mu$m in diameter, or of the core type, as hereinbefore defined, wherein the micronised isoproturon particles are predominantly less than 10 $\mu$m in diameter.

10. A herbicidal composition according to claim 7, 8 or 9 characterised in that the granular formulation contains from 0.1% to 10% by weight of surface-active agent.

11. A method for the preparation of a granular herbicidal composition as claimed in any one of claims 7 to 10 characterised by (i) intimately mixing the micronised isoproturon and triallate and, if desired, surface active agent, with the inert solid carrier in powder form, if necessary in the presence of a suitable liquid, and then granulating the powder blend thus obtained and, if necessary, drying the granules thus obtained, (ii) intimately mixing the micronised isoproturon and, if desired, surface-active agent, with the inert solid carrier in powder form, if necessary in the presence of a suitable liquid, granulating the powder blend thus obtained and, if necessary, drying the granules thus obtained, and then treating the isoproturon-containing granules with a solution of triallate in a suitable liquid to absorb the triallate into the granules and, if necessary, drying the granules thus obtained, or (iii) suspending the micronised isoproturon in a solution of triallate and, if desired, surface-active agent, in a suitable liquid, and applying uniformly the suspension thus obtained to granule cores of inert solid carrier, in a blender, whereby the triallate and, if present, surface-active agent, are absorbed into the granule core and the micronised isoproturon particles adhere to the surface of the granule core and, if necessary, drying the granules thus obtained, suitable liquids being those in which triallate has a solubility of at least 30% (weight/volume) and in which isoproturon has a solubility not greater than 5% (weight/volume).

17

**0 042 688**

Revendications

1. Procédé de lutte contre la croissance des adventices graminées et dicotylédones caractérisé en ce que l'herbicide Isopropyl-4 phényl)-3-diméthyl-1, 1 urée (désigné ci-après par "isoproturon") et l'herbicide di-isopropylthio-carbonate de S-trichloro-2,3,3 alkyle (désigne ci-après par "triallate") sont utilisés en combinaison sur un lieu infesté par les adventices, dans des rapports pondéraux d'isoproturon au triallate de 2,5:1 à 1:2,5 et de préférence 1:1, respectivement et à des doses d'application respectives de 1,0 à 2,5, et de préférence de 1,25 à 1,75 Kg, à l'hectare d'isoproturon et de triallate en application de prélevée ou de postlevée.

2. Procédé de lutte contre la croissance des adventices graminées et dicotylédones selon la revendication 1, caractérisée en ce que l'isoproturon et le triallate sont appliqués en combinaison i) en pré ou post levée à un lieu infesté par les adventices utilisé, ou destiné à être utilisé, pour la culture de céréales et de haricots ou ii) en post levée à un lieu infesté par les adventices utilisé pour la culture de colza d'hiver.

3. Procédé selon l'une des revendications 1 et 2, caractérisé en ce que les adventices combattues sont au moins l'une des espèces suivantes: *Avena fatua, Avena ludoviciana, Alopercurus myosuroides, Apera spica-venti, Poa annua, Poa trivialis, Bromus sterilis, Alphanes arvensis, Anthemis arvensis, Anthemis cotula, Chenopodium album, Chrysanthenum segetum, Fumaria officionalis, Matricaria inodora, Papaver rhoeas, Polygonum persica, Polygonum Lapathifolium, Stellaria media, Spergula arvensis* et *Veronica persica.*

4. Procédé selon l'une des revendications 1, 2 et 3, caractérisé en ce que l'isoproturon et le triallate sont appliqués simultanément à un lieu infesté par les adventices qui est utilisé, ou destiné à être utilisé, pour la croissance de blé d'hiver, de blé de printemps, d'orge d'hiver, d'orge de printemps ou de seigle.

5. Procédé selon l'une des revendications 1 à 4, caractérisé en ce que l'isoproturon et le triallate sont appliqués simultanément à l'aide d'un mélange ex-temporanné préparé à partir de concentré en émulsion de triallate avec des concentrés en poudre mouillable ou en suspension aqueuse d'isoproturon, à l'aide de concentrés liquides en émulsion suspension ou de concentrés émulsionnable en suspension contenant à la fois l'isoproturon et le triallate, ou en formulation granulée contenant à la fois l'isoproturon et le triallate.

6. Composition herbicide pour la lutte contre la croissance des adventices graminées et dicotylédones caractérisée en ce qu'elle contient une combinaison d'isoproturon et de triallate en association avec au moins un diluant ou support compatible et convenable pour un herbicide, dans laquelle le rapport pondéral d'isoproturon au triallate est respectivement de 2,5:1 à 1:2,5 et de préférence 1:1, sous forme d'un concentré liquide en émulsion suspension, un concentré liquide émulsionnable en suspension ou une formulation granulée.

7. Composition herbicide selon la revendication 6 caractérisée en ce qu'elle est sous forme d'une formulation granulée contenant 2 à 20% en poids d'isoproturon, sous forme de particules micronisées, et de triallate, les granulés ayant un diamètre de 150 à 1000 $\mu$m.

8. Composition herbicide selon la revendication 7 caractérisée en ce que l'isoproturon, sous forme de particules micronisées, et le triallate sont incorporés dans le corps du granulé, ou bien le triallate est incorporé dans le noyau du granulé et les particules d'isoproturon adhèrent à la surface du granulé.

9. Composition herbicide selon l'une des revendications 6, 7 et 8 caractérisée en ce qu'elle se présente sous forme d'une formulation granulée du type "mélange intime" ("compounded"), comme défini ci-dessus, dans laquelle les particules micronisées d'isoproturon ont un diamètre de a 40 $\mu$m, ou de type "à noyau", comme défini ci-dessus, dans laquelle les particules micronisées d'isoproturon ont dans une proportion prédominante, un diamètre inférieur à 10 mm.

10. Composition herbicide selon l'une des revendications 7, 8 et 9 caractérisée en ce que la formulation granulée contient de 0,1% à 10%, en poids, d'agent tensio-actif.

11. Procédé de préparation d'une composition herbicide granulée selon l'une des revendications 7 à 10, caractérisé en ce que i) on mélange intimement l'isoproturon micronisé et le triallate et, si on le souhaite, l'agent tensio-actif, avec le support solide inerte sous forme de poudre, si nécessaire en présence d'un liquide convenable, puis à granuler le mélange en poudre ainsi obtenu et, si nécessaire, à sécher les granulés ainsi obtenus, ii) on mélange intimement l'isoproturon micronisé et, si nécessaire, l'agent tensio-actif, avec le support solide inerte sous forme de poudre, si nécessaire en présence d'un liquide convenable, à granuler le mélange en poudre ainsi obtenu et, si nécessaire sécher les granulés ainsi obtenus, puis à traiter les granulés contenant l'isoproturon avec une solution de triallate dans un liquide convenable pour absorber le triallate dans les granulés et, si nécessaire sécher les granulés ainsi obtenus, ou iii) mettre en suspension l'isoproturon micronisé dans une solution de triallate et, si on le souhaite, l'agent tensio-actif, dans un liquide convenable, et à appliquer uniformément la suspension ainsi obtenue à des noyaux granulés de support solide inerte, dans un mélange moyennant quoi le triallate et, le cas échéant, l'agent tensio-actif, sont absorbés dans le noyau granulé et les particules micronisées d'isoproturon adhèrent à la surface du granulé et, si nécessaire, sécher les granulés ainsi obtenus, les liquides convenables étant ceux dans lesquels le triallate présente une solubilité d'au moins 30% (poids/volume) et l'isoproturon une solubilité au plus égale à 5% (poids/volume).

18

# 0 042 688

Patentansprüche

1. Verfahren zur Wachstumskontrolle von Unkrautgras und breitblättrigen Unkräutern, dadurch gekennzeichnet, daß man die Herbicide 3-(4-Isopropylphenyl)-1,1-dimethylharnstoff (folgend als Isoproturon bezeichnet) und S-2,3,3-Trichlorallyldiisopropylthiocarbamat (folgend als Triallat bezeichnet) in Kombination im Gewichtsverhältnis von Isoproturon zu Triallat von 2,5:1 bis 1:2,5, vorzugsweise von 1:1, am Ort des Unkrautbefalls anwendet, und die Menge von Isoproturon sowie von Triallat 1,0 bis 2,5 kg, vorzugsweise 1,25 bis 1,75 kg pro Hektar bei der Voroder nachbehandlung beträgt.

2. Verfahren zur Wachstumskontrolle von Unkrautgras und breitblättrigen Unkräutern nach Anspruch 1, dadurch gekennzeichnet, daß man Isoproturon und Triallat in Kombination anwendet (i) bei Vor- oder Nachbehandlung am Ort des Unkrautbefalls auf Flächen, die für den Anbau von Getreide und Feldbohnen benützt werden oder vorgesehen sind, oder (ii) bei Vor- oder Nachbehandlung am Ort des Unkrautbefalls auf Flächen, die für den Anbau der Winteraussaat der Ölfrucht Raps benützt werden oder vorgesehen sind.

3. Verfahren nach Anspruch 1 oder 2, dadurch gekennzeichnet, daß die zu kontrollierenden Unkräuter eines oder mehrere von *Avena fatua, Avena ludoviciana, Alopecurus myosuroides, Apera spicaventi, Poa annua, Poa trivialis, Bromus sterilis, Alphanes arvensis, Anthemis arvensis, Anthemis cotula, Chenopodium album, Chrysanthemum segetum, Fumaria officionalis, Matricaria inodora, Papaver rhoeas, Polygonum aviculare, Polygonum persica, Polygonum lapathifolium, Stellaria media, Spergula arvensis* und *Veronica persica,* sind.

4. Verfahren nach Anspruch 1, 2 oder 3, dadurch gekennzeichnet, daß man Isoproturon und Triallat am Ort des Unkrautbefalls gleichzeitig auf Flächen anwendet, die für den Anbau von Winterweizen, Frühjahrsweizen, Wintergerste, Frühjahrsgerste oder Roggen benützt werden oder vorgesehen sind.

5. Verfahren nach einem der Ansprüche 1 bis 4, dadurch gekennzeichnet, daß man Isoproturon und Triallat gleichzeitig mit Hilfe von Tankgemischen, die aus Emulsionskonzentraten von Triallat mit einem benetzbaren Pulver oder wässerigen Suspensionskonzentraten von Isoproturon hergestellt worden sind, oder durch Anwendung von emulgierbaren Suspensionskonzentraten, die beides, Isoproturon und Triallat enthalten, oder als granulierte Formulierungen, die beides, Isoproturon und Triallate enthalten, anwendet.

6. Herbicide Zusammensetzung für die Wachstumskontrolle von Unkrautgras und breitblättrigen Unkräutern, dadurch gekennzeichnet, daß die Zusammensetzung eine Kombination aus Isoproturon und Triallate im Verein mit einem oder mehreren, für Herbicide passenden verträglichen Verdünnungsmitteln oder Trägern ist, wobei das Gewichtsverhältnis von Isoproturon zu Triallat in der Zusammensetzung 2,5: 1 bis 1:2,5, vorzugsweise 1:1, in Form eines flüssigen Emulsions-Suspensions-Konzentrates, eines flüssigen emulgierbaren Suspensionskonzentrats oder einer granulierten Formulierung beträgt.

7. Herbicide Zusammensetzungen nach Anspruch 6, dadurch gekennzeichnet, daß die herbicide Zusammensetzung in Form einer granulierten Formulierung ist, die 2 bis 20 Gew.-% Isoproturon in Form von fein gemahlenen Teilchen und Triallat enthält, wobei die Granulatkörner eine Durchmesser von 150 bis 1000 μm aufweisen.

8. Herbicide Zusammensetzungen nach Anspruch 7, dadurch gekennzeichnet, daß das Isoproturon in Form fein gemahlener Teilchen und Triallat in die Granulatteilchen eingearbeitet sind, oder daß das Triallat sich im Innern der Granulatteilchen befindet und die fein gemahlenen Teilchen des Isoproturons an der Oberfläche der Granulatteilchen haften.

9. Herbicide Zusammensetzung nach den Ansprüchen 6, 7 oder 8, dadurch gekennzeichnet, daß die herbicide Zusammensetzung in Form einer Granulatformulierung vom vorstehend definierten Verbindungstyp vorliegt, worin die fein gemahlene Isoproturonteilchen einen Durchmesser von 1 bis 40 μm haben, oder die Granulatformulierung vom Kern-Typ ist, wie vorstehend definiert, wobei die fein gemahlenen Isoproturonteilchem überwiegend einen Durchmesser von weniger als 10 μm haben.

10. Herbicide Zusammensetzung nach den Ansprüchen 7, 8 oder 9, dadurch gekennzeichnet, daß die Granulatzusammensetzung 0,1 bis 10 Gew.% oberflächenaktiver Mittel enthält.

11. Verfahren zur Herstellung einer herbiciden Granulatzusammensetzung nach einem der Ansprüche 7 bis 10, dadurch gekennzeichnet, daß man (i) das fein gemahlene Isoproturon und Triallat und gegebenenfalls oberflächenaktive Mittel mit dem inerten, festen pulverförmigen Träger, wenn erforderlich in Gegenwart einer geeigneten Flüssigkeit, innig vermischt, das so erhaltene Pulvergemisch granuliert und, wenn erforderlich, das so erhalten Granulat trocknet, (ii) das fein gemahlene Isoproturon und, wenn erforderlich, das oberflächenaktive Mittel mit dem inerten pulverförmigen festen Träger, wenn erforderlich, in Gegenwart einer geeigneten Flüssigkeit, innig vermischt, das so erhaltene Pulvergemisch granuliert und, wenn erforderlich, trocknet, wosie anschließend das so erhaltene, Isoproturon enthaltende Granulat mit einer Lösung von Triallat in einer geeigneten Flüssigkeit behandelt, um das Triallat in das Granulat aufzunehmen, und, wenn erforderlich, das so erhaltene Granulat trocknet, oder (iii) das fein gemahlene Isoproturon in einer Lösung von Triallat in einer geeigneten Flüssigkeit suspendiert und, wenn erforderlich, ein oberflächenaktives Mittel zugibt, die so erhaltene Suspension in einem Mischer mit den Granulatkernen eines festen inerten Trägers gleichmäßig zusammen-

19

bringt, wobei das Triallat und, wenn zugegen, das oberflächenaktive Mittel im Inneren der Granulatteilchen aufgenommen werden und die fein gemahlenen Isoproturonteilchen an der Oberfläche des Granulats haften und, wenn erforderlich, das so erhaltene Granulat trocknet; geeignete Flüssigkeiten sind dabei solche, in welchem Triallat eine Löslichkeit von wenigstens 30% (Gewicht/Volumen) hat und in welchen Isoproturon eine Löslichkeit von nicht über 5% (Gewicht/Volumen) hat.